# EUROPEAN PATENT APPLICATION

(11) **EP 4 764 197 A1**
(43) Date of publication of application: **24.06.2026**
(21) Application number: 25222197.3
(22) Date of filing: 10.12.2025
(51) Int. Cl.: F02M 21/02

(54) **INTERNAL COMBUSTION ENGINE AND FUELING SYSTEM FOR INJECTING GASEOUS FUEL AND METHOD FOR RELEASING MOVABLE MASS FROM VALVE SEAT**

(30) Priority: 19.12.2024 US 202418987060
(71) Applicant: Cummins, Inc., Columbus, Indiana 47201 (US)
(72) Inventor: MANRING, Edward, Edinburgh, 46124 (US); LASKA, Andrew, Columbus, 47201 (US); VIOLA, Timothy, Columbus, 47203 (US); CANTRELL, Eric, Greenwood, 46142 (US)
(74) Representative: Cleveland Scott York

(57) **Abstract**

A mass is movable into and out of contact with a valve seat to control flow through an opening of the valve seat. The movable mass is operably coupled to an electronic actuator. A drive current is supplied to the electronic actuator in a manner that induces a mechanical resonance in the movable mass to release the movable mass from the valve seat in response to a release condition, such as when the movable mass is stuck to the valve seat due to a temperature condition.

## Description

### Technical Field:

The present application relates to internal combustion engines, and more particularly to fueling systems for injecting gaseous fuel and method for releasing a movable mass from a valve seat.

### BACKGROUND

Gaseous fuel injectors may be provided in a number of configurations including, for example, spark ignition direct injection (SIDI) configurations, spark ignition port injection configurations, and a number of dual-fuel and multi-fuel configurations operable to combust a combination of gaseous fuel and one or more other fuels. While providing substantial utility, performance of gaseous fuel injectors may suffer in cold weather conditions. For example, freezing of components of the fuel injector may occur, which requires a relatively large increase in the drive current to release the components. The increase in drive current creates inefficiencies. Therefore, there remains a need for further improvements in this area.

### DISCLOSURE OF EXAMPLE EMBODIMENTS

For the purposes of clearly, concisely, and exactly describing example embodiments of the present disclosure, the manner, and process of making and using the same, and to enable the practice, making and use of the same, reference will now be made to certain example embodiments, including those illustrated in the figures, and specific language will be used to describe the same. It shall nevertheless be understood that no limitation of the scope of the invention is thereby created, and that the invention as set forth in the claims following this disclosure includes and protects such alterations, modifications, and further applications of the example embodiments as would occur to one skilled in the art with the benefit of the present disclosure.

### SUMMARY

Flow control valves can employ a movable mass with one or more flexible elements that are associated with closing the valve to inhibit, by limiting or prohibiting, fluid flow through the valve. For example, fuel injectors can include an elastomer seal, spring, or other flexible element(s) associated with a movable mass, such as a plunger or armature, which assists in closing an opening through a valve seat of the valve. In certain conditions, such as cold weather conditions, the flexible element(s) may become frozen or more rigid so that a release condition is created in which the movable mass and valve seat are "stuck" together. The release condition that is created between the movable mass and valve seat may prevent release of the movable mass from the valve seat using nominal actuation forces that are typically employed to displace the movable mass to open the valve seat to provide fluid flow. The present disclosure contemplates controlling an electronic actuator of the flow control valve to induce vibratory forces in the movable mass that cause the movable mass to release from the valve seat.

In an embodiment of the present disclosure, a method for releasing a movable mass attached to a valve seat includes determining a release condition between the movable mass and the valve seat is present and generating a drive current for an actuator that is coupled to the movable mass. The drive current is generated at a pulse width modulation switching frequency that induces a mechanical resonance in the movable mass. The method also includes releasing the movable mass from the valve seat via the mechanical resonance induced into the movable mass by the drive current.

In another embodiment, an internal combustion engine operable to combust gaseous fuel is provided. The internal combustion engine includes a gaseous fueling system including at least one fuel injector configured to inject gaseous fuel for combustion in a combustion chamber of the internal combustion engine. The at least one fuel injector includes a valve seat with at least one opening to permit gaseous fuel flow through the valve seat and a movable mass contactable with the valve seat to inhibit gaseous fuel flow through the valve seat. The internal combustion engine also includes an electronic control system operatively coupled with the gaseous fueling system. The electronic control system is configured to induce a vibration in the movable mass in response to a release condition in order to release the movable mass from the valve seat.

According to another embodiment of the disclosure, a fueling system for injecting gaseous fuel to a combustion chamber of an internal combustion engine is provided. The fueling system includes a fuel injector configured to inject gaseous fuel for combustion in the combustion chamber of the internal combustion engine. The fuel injector includes a valve seat with at least one opening to permit gaseous fuel flow through the valve seat, a movable mass contactable with the valve seat to inhibit gaseous fuel flow through the valve seat, and an electronic actuator coupled to the movable mass. The electronic actuator is operable to move the movable mass away from the valve seat in response to a drive current supplied to the electronic actuator. The fuel injection system also includes an electronic control unit configured to generate the drive current at a pulse width modulation switching frequency that induces a mechanical resonance in the movable mass to release the movable mass from the valve seat.

Further embodiments, forms, objects, features, advantages, aspects, and benefits shall become apparent from the following description and drawings.

### BRIEF DESCRIPTION OF THE DRAWINGS

FIG. 1 is a schematic diagram illustrating certain aspects of an example internal combustion engine with a gaseous fueling system.
FIG. 2 is a schematic diagram illustrating certain aspects of an example gaseous fueling system of the internal combustion engine of FIG. 1.
FIG. 3 is a schematic diagram illustrating certain aspects of a fuel injector of the gaseous fueling system of FIG. 2.
FIG. 4 is a flow diagram depicting certain aspects of an example method for releasing a movable mass from a valve seat in response to a release condition.

### DETAILED DESCRIPTION

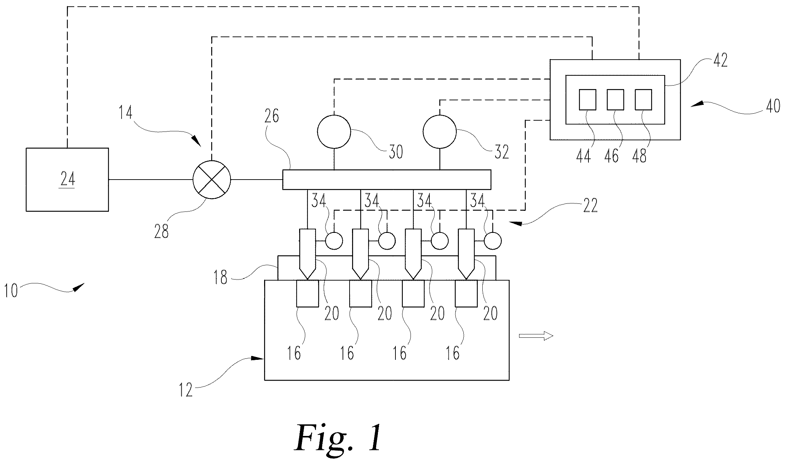

With reference to FIG. 1, there is illustrated a system 10 that includes an internal combustion engine 12 having a gaseous fueling system 14. Gaseous fueling system 14 is configured to supply a gaseous fuel, such as natural gas, hydrogen, bio-derived gaseous fuels, mixed gases fuels or other gaseous fuels for combustion by internal combustion engine 12. In the illustrated example, gaseous fueling system 14 is the sole fuel injection system of internal combustion engine 12. In other embodiments, gaseous fueling system 14 may be provided in combination with other gaseous or non-gaseous fueling systems, for example, in the form of dual-fuel or multi-fuel engines.

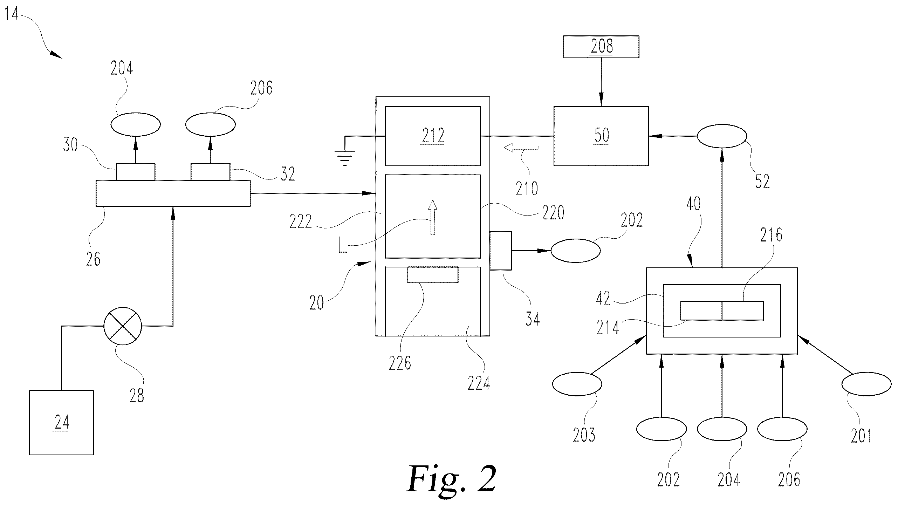

Internal combustion engine 12 includes combustion chambers 16 (also referred to as cylinders) of a reciprocating piston-in-cylinder-type engine which are configured to generate mechanical power from the combustion of gaseous fuel supplied by fuel injectors 20 (also referred to herein as injectors 20). Injectors 20 are in fluid communication with respective combustion chambers 16 of the internal combustion engine 12 and are structured to inject gaseous fuel which is provided to their respective combustion chambers 16. In an embodiment, each fuel injector 20 includes a movable mass 220 that is actuatable to open a valve seat 224, such as shown in FIGs. 2-3.

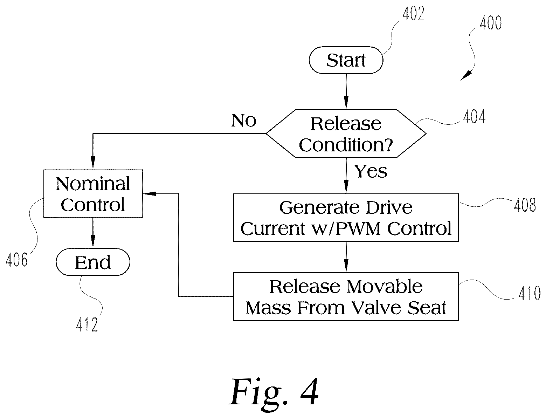

With further reference to FIG. 4, in an embodiment of the present disclosure, a method 400 for releasing movable mass 220 when attached to valve seat 224 is provided. The method 400 includes a step 404 of determining a release condition between movable mass 220 and valve seat 224 is present and a step 408 of generating a drive current for an actuator 232 that is coupled to movable mass 220. The drive current is generated at a pulse width modulation switching frequency that induces a mechanical resonance in movable mass 220. Method 400 also includes a step 410 of releasing movable mass 220 from valve seat 224 via the mechanical resonance induced into movable mass 220 by the drive current.

In an embodiment of the present disclosure, internal combustion engine 12 is provided that is operable to combust gaseous fuel. Internal combustion engine 12 includes gaseous fueling system 14 including at least one fuel injector 20 configured to inject gaseous fuel for combustion in combustion chamber 16 of internal combustion engine 12. The at least one fuel injector 20 includes valve seat 224 with at least one opening 226 to permit gaseous fuel flow through valve seat 224. Fuel injector 20 also includes movable mass 220 contactable with valve seat 224 to inhibit gaseous fuel flow through valve seat 224. Internal combustion engine 12 includes an electronic control system 40 operatively coupled with gaseous fueling system 14. Electronic control system 40 is configured to induce a vibration in movable mass 220 in response to a release condition in order to release movable mass 220 from valve seat 224.

According to another embodiment of the disclosure, gaseous fueling system 14 is provided for injecting gaseous fuel to combustion chamber 16 of internal combustion engine 12. Gaseous fueling system 14 includes fuel injector 20 configured to inject gaseous fuel for combustion in combustion chamber 16 of internal combustion engine 12. Fuel injector 20 includes valve seat 224 with at least one opening 226 to permit gaseous fuel flow through valve seat 224, movable mass 220 contactable with valve seat 224 to inhibit gaseous fuel flow through valve seat 224, and electronic actuator 232 coupled to movable mass 220. Electronic actuator 232 is operable to move movable mass 220 away from valve seat 224 in response to a drive current supplied to electronic actuator 232. Gaseous fueling system 14 also includes an electronic control unit 42 configured to generate the drive current at a pulse width modulation switching frequency that induces a mechanical resonance in movable mass 220 to release movable mass 220 from valve seat 224.

In the illustrated embodiment of FIG. 1, four injectors 20 and four combustion chambers 16 are depicted, it being appreciated that internal combustion engine 12 may include fewer or greater numbers of injectors 20 and combustion chambers 16. System 10 may be provided in a number of forms including as a prime mover system (or component of a prime mover system) of vehicle, a genset, other power-load system.

In the illustrated embodiment of FIG. 1, injectors 20 are configured and provided as direct fuel injectors configured to inject fuel directly into respective combustion chambers 16 of internal combustion engine 12. Other embodiments may include other types and configurations of injectors such as port fuel injectors configured to inject fuel directly into respective ports of intake manifold 18 leading to respective combustion chambers 16 of internal combustion engine 12 and embodiments including injectors located at an intake air throttle body wherein the injectors may not be closely coupled with specific cylinders.

In the illustrated embodiment, the gaseous fueling system 14 includes a gaseous fuel supply and injection system 22 and a gaseous fuel source 24. Gaseous fuel supply and injection system 22 includes at least one rail 26 and one or more sets of injectors 20 operatively coupled with and supplied with gaseous fuel from a respective one of the rails 26. The rail 26 is, in turn, configured to receive pressurized gaseous fuel from gaseous fuel source 24.

The gaseous fuel source 24 may include a high pressure tank configured to store a supply of gaseous fuel at high pressure. In some embodiments, gaseous fuel source 24 may include additional elements such as a compressor configured to compress gaseous fuel received from the fuel tank and supply compressed gaseous fuel to the rail 26, and/or an accumulator as well as electronically controllable valves configured to control supply of gaseous fuel to and from the accumulator and/or the rail 26.

It shall be appreciated that the illustrated form of gaseous fueling system 14 is but one example of a fueling system according to the present disclosure. In other embodiments, the gaseous fueling system 14 may be configured and provided as another type of gaseous fueling system, for example, as a gaseous hydrogen fueling system. In other embodiments, gaseous fueling system 14 may be configured and provided in other forms and in other arrangements and/or components.

System 10 further includes electronic control system (ECS) 40 in operative communication with internal combustion engine 12 and systems and components thereof. ECS 40 may be in operative communication with, for example, gaseous fuel source 24, fuel shut-off valve (FSOV) 28, injectors 20, one or more rail pressure sensors 30, one or more rail temperature sensors 32, and one or more injector pressure/temperature sensors 34, among other components and systems.

ECS 40 is configured to control one or more aspects of internal combustion engine 12, including controlling the injectors 20. Accordingly, ECS 40 may be in communication with the injectors 20 and configured to command each fuel injector 20 on and off at prescribed times to inject fuel into the internal combustion engine 12 as desired. ECS 40 typically includes at least one electronic control unit (ECU) 42 also sometimes referred to as an engine control module (ECM). ECU 42 is configured to execute operations of ECS 40 as described further herein and, in some embodiments, may include additional ECUs configured to execute operations of ECS 40 as described further herein. In an embodiment, ECU 42 includes a processor and a memory 48 with instructions stored thereon that are executable by the processor to perform the controls discussed herein.

ECS 40 may be further structured to control other parameters of internal combustion engine 12, which may include aspects of internal combustion engine 12 that may be controlled with an actuator activated by ECS 40. For example, ECS 40 may be in communication with actuators and sensors for receiving and processing sensor input and transmitting actuator output signals. Actuators may include, but not be limited to, fuel injectors 20. The sensors may include any suitable devices to monitor operating parameters and functions of the system 10. For example, the sensors may include one or more pressure sensors 30, one or more temperature sensors 32, and one or more injector pressure/temperature sensors 34. The one or more pressure sensors 30 are in communication with the rail 26 and structured to communicate a measurement of the pressure of gaseous fuel in the rail 26 (also referred to as fuel rail pressure or rail pressure) to the ECS 40. The one or more temperature sensors 32 are in communication with the rail 26 and structured to communicate a measurement of the temperature of gaseous fuel in the rail 26 (also referred to as fuel rail temperature or rail temperature) to the ECS 40. Injector pressure/temperature sensors 34 in communication with and configured to sense a pressure and/or a temperature of respective ones of the injectors 20. It should be understood that injector pressure/temperature sensors 34 may be configured to sense temperature only, pressure only, or both temperature and pressure.

As will be appreciated by the description that follows, the techniques described herein relating to fuel injector or fuel injection controls can be implemented in ECS 40, which may include one or more controllers for controlling different aspects of the system 10. The ECS 40 may be comprised of digital circuitry, analog circuitry, or a hybrid combination of both of these types. Also, the ECS 40 may be programmable, an integrated state machine, or a hybrid combination thereof. The ECS 40 may include one or more microcontrollers, microprocessors, application specific integrated circuits (ASICs), arithmetic logic units (ALUs), processors, memories, limiters, conditioners, filters, format converters, or the like. In one form, the ECS 40 is of a programmable variety that executes algorithms and processes data in accordance with operating logic that is defined by programming instructions (such as software or firmware). Alternatively or additionally, operating logic for the ECS 40 may be at least partially defined by hardwired logic or other hardware.

In the illustrated example, ECU 42 of ECS 40 comprises one or more microcontrollers 44, one or more processors such as an ASIC 46, and memory 48 which are configured to participate in controlling operations of injectors 20. Injector control logic and injector driver circuitry and functionality may be provided in or distributed among the one or more microcontrollers 44, one or more ASICs 46, and memory 48. It shall be appreciated that the illustrated configuration is but one example of the ECU and ECS configurations contemplated by the present disclosure.

In addition to the types of sensors described herein, any other suitable sensors and their associated parameters may be encompassed by the system and methods. Accordingly, the sensors may include any suitable device used to sense any relevant physical parameters including electrical, mechanical, and chemical parameters of the system 10. As used herein, the term sensors may include any suitable hardware and/or software used to sense or estimate any engine system parameter and/or various combinations of such parameters either directly or indirectly.

With reference to FIG. 2, there are illustrated further details of an example embodiment of gaseous fueling system 14. An example fuel injector 20 for gaseous fuel that may correspond to any of the injectors 20 disclosed herein is depicted and is operatively coupled with an injector driver 50 which is configured to receive one or more injector control signals 52. In an embodiment, injector driver 50 is a pulse width modulation driver. In an embodiment, injector driver 50 is a programmable gate driver with both high and low side drivers, one or both of which can be turned on and off to increase switching frequency of the pulse width modulation control of the injector drive current, as discussed further below.

In some embodiments, the one or more microcontrollers 44 may provide programming or settings to the one or more ASICs 46 which are configured as injector drivers 50. Such programming and settings are utilized in controlling operation of the injectors 20. Such programming or settings may selectably allow or override of nominal injector actuation control for fueling internal combustion engine 12 with fuel injector 20, and selectably allow or override injector release condition actuation control to release fuel injector 20 from a stuck or release condition. The one or more microcontrollers 44 may communicate the one or more ASICs 46 via a serial peripheral interface (SPI) which can be used to send values for programmable settings utilized by the one or more ASICs 46, for example, for drive current control and diagnostic settings.

The one or more microcontrollers 44 may communicate with the one or more ASICs 46 via one or more logic channels which communicate a drive current with excitation created by pulse width modulation driver control. In an embodiment, the frequency produced by pulse width modulation control of the drive current is created by changing the commanded drive current hysteresis used in during pulse width modulation control. The frequency induced by pulse width modulation control is used to create a mechanical resonance in one or more components of the fuel injector 20 of sufficient force to release the movable mass from the valve seat and thereafter allow fuel injector actuation using nominal actuation forces. In an embodiment, the boost voltage produced by ECU 42 can be adjusted in conjunction with the PWM hysteresis setting to produce a sufficient amount of current and force hysteresis at the frequency of mechanical resonance.

Nominal injector control according to the present disclosure refers to injector control adapted, configured, or utilized to control injector operation to provide a desired engine output torque, power, and/or speed as a primary or exclusive control basis or objective. Release condition injector control according to the present disclosure refers to injector control adapted, configured, or utilized to mitigate or eliminate stuck injector conditions or to break loose or release a stuck injector to restore desired function of one or more injectors as a primary or exclusive control basis or objective. Such programming or settings may provide information for controlling timing, duration, order, frequency, phase, magnitude and other attributes of the drive current utilized in controlling injectors 20. Such information may be provided for nominal injector control and for release condition injector control.

A number of sensor signals and associated control system parameters are illustrated in FIG. 2. Injector pressure/temperature 202 is provided by an illustrated one of injector temperature/pressure sensors 34 and is indicative of a pressure and/or temperature of gaseous fuel in injector 20. Rail pressure 204 is provided by the one or more rail pressure sensors 30 and is indicative of a pressure of gaseous fuel of fuel rail 26. Rail temperature 206 is provided by the one or more rail temperature sensors 32 and is indicative of a temperature of gaseous fuel of fuel rail 26.

An injector-on state of the one or more injector control signals 52 may be effective to actuate one or more switches of injector driver 50 which are operatively coupled with a system voltage source 208 and configured to selectably supply drive current 210 to solenoid 212 of injector 20. In an embodiment, voltage source 208 is a battery of the internal combustion engine 12. In an embodiment, voltage source 208 is sufficient to provide the current hysteresis excursion in the pulse width modulation control of fuel injector 20 needed to achieve mechanical resonance of movable mass 220. In an embodiment, a boost voltage is provided to supplement voltage source 208 to achieve the desired current hysteresis excursion for pulse width modulation control of fuel injector 20. In an embodiment, the boost voltage produced by ECU 42 can be adjusted in conjunction with the PWM hysteresis setting to produce a sufficient amount of current and force hysteresis at the frequency of mechanical resonance.

Under nominal control operations of fuel injector 20, the drive current 210 is effective to energize solenoid 212 to induce lifting motion of movable mass 220 in the direction generally indicated by arrow L. In the lifted position illustrated in FIG. 2, movable mass 220 allows fuel supplied to injector gallery 222 to exit or flow through one or more openings 226 of valve seat 224 of fuel injector 20 as a fuel injection directly or indirectly into an associated combustion chamber 16 of internal combustion engine 12.

ECS 40 and/or ECU 42 is configured to determine if a release condition is present between movable mass 220 and valve seat 224. Under release condition control operation of fuel injector 20, drive current 210 is controlled by ECS 40 and/or ECU 42 to induce a vibration in movable mass 220 to release movable mass 220 from valve seat 224. In an embodiment, solenoid 212 is operable in response to drive current 210 to generate a magnetic field to induce vibration in movable mass 220 to separate it from valve seat 224 so that movable mass 220 is no longer "stuck" or attached to valve seat 224.

In an embodiment, ECS 40 and/or ECU 432 is configured to generate drive current 210 with a drive current hysteresis that is greater than a threshold amount to release movable mass 220 from valve seat 224 in response to a release condition. Pulse width modulation control of the drive current 210 is used to generate drive current 210 at the drive current hysteresis. In an embodiment of injector driver 50, ECS 40 and/or ECU 42 is configured to turn off at least a high side driver of the gate driver during pulse width modulation to generate drive current 210 at the drive current hysteresis. In a further embodiment, both the high side driver and a low side driver of the gate driver are turned off during pulse width modulation to generate drive current 210 at the drive current hysteresis.

In an embodiment, ECS 40 and/or ECU 42 is configured to increase the drive current hysteresis of the pulse width modulation control of drive current 210 to increase an amplitude of a force of the induced vibration while reducing a frequency of the generated drive current 210. In an embodiment, the frequency that is induced is between 1 kilohertz (kHz) and 3 kilohertz. In an embodiment, the threshold amount for the drive current hysteresis is at least 3 amperes. In an embodiment, the threshold amount for the force is about 14 newtons.

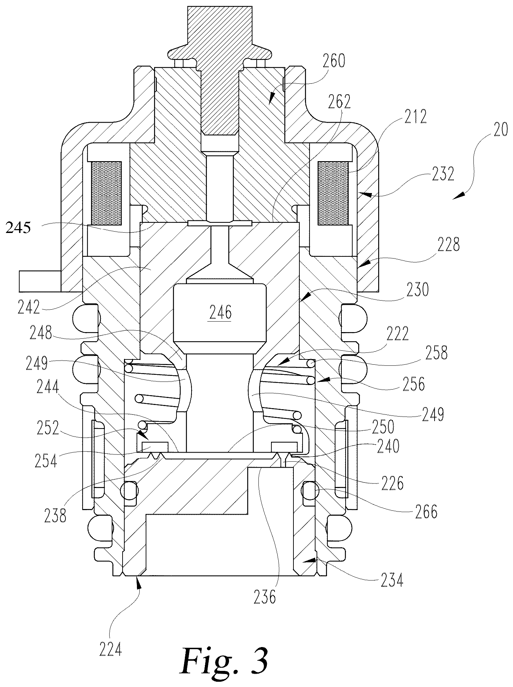

Referring further to FIG. 3, a portion of an embodiment fuel injector 20 is shown. The illustrated embodiment of fuel injector 20 includes a housing 228 that houses valve seat 224, a movable mass 220 in the form of a plunger or armature 230, and an actuator 232 such as solenoid 212. Valve seat 224 includes a cylindrical body 234 that is sealingly engaged within housing 230 with an outer seal 266. Cylindrical body 234 of valve seat 224 also includes a proximal end wall 236 with one or more openings 226 that allow gaseous fuel to flow through cylindrical body 234. A nozzle (not shown) may be engaged directly or indirectly to housing 228.

In an embodiment, opening(s) 226 extends annularly in a circular pattern around end wall 236. Cylindrical body 234 includes a first projection 238 along a first or inner side of the at least one opening 226 and a second projection 240 along a second or outer side of the at least one opening 226. The first and second projections 238, 240 extend proximally from end wall 236 toward movable mass 220.

Movable mass 220 includes a movable body 242 extending from a distal end face 245 to an opposite proximal end face 246. Body 242 of movable mass 220 includes a sidewall 248 forming an inner cavity 246. Sidewall 246 includes a plurality of apertures 249 to admit gaseous fuel into inner cavity 246. End face 245determine a release condition between the includes an aperture 250 to permit gaseous fuel flow out of interior cavity 246 toward valve seat 224.

Movable mass 222 further includes a first flexible member 252 in the form of a seal 254 on end face 244. Seal 254 can be, for example, an elastomeric ring that is housed in a ringshaped groove in end face 244 and extends around aperture 250. Seal 254 contacts first and second projections 238, 240 of valve seat 224 to sealingly close the at least one opening 226 through valve seat 224 to inhibit gaseous fuel flow, as shown in FIG 3. In other embodiments, seal 254 may be provided on valve seat 224.

Movable mass 222 may further include a second flexible member 256, such as a coil spring 258, to bias body 242 to the closed position with annular seal 254 in sealing contact with projections 238, 240 of valve seat 224. In the closed position, proximal end face 246 of body 242 is spaced distally from a proximal end member 260 of fuel injector 20 by a gap 262. Gap 262 allows proximal movement of body 242 away from valve seat 224 via actuation from solenoid 212 to open the at least one opening 226.

As discussed herein, certain conditions cause body 242 of movable mass 220 to become stuck to valve seat 226, such as might be created by freezing of one or more of flexible members 252, 256. For example, an elastomer type annular seal 254 may freeze to first and second projections 238, 240 such that actuation forces from actuator 232 used during nominal control of fuel injector 20 are not capable of releasing annular seal 254 from projections 238, 240 to displace body 242 of movable mass 220. In another example, coil spring 258 may freeze to become too stiff to release body 242 from valve seat 224 for compression using actuation forces from actuator 232 that are employed during nominal control of fuel injector 20.

Referring back to FIG. 2, ECS 40 and/or ECU 42 are configured to determine and output the one or more injector control signals 52 to control operation of fuel injector 20 in response to one or more inputs. In the illustrated example, ECS 40 and/or ECU 42 are configured to determine and output injector commands for a particular individual fuel injector 20. ECS 40 and/or ECU 42 may also be configured to determine and output injector commands for other particular individual fuel injectors 20. ECS 40 and/or ECU 42 are configured to receive a plurality of inputs, such as fueling commands, engine speed, injector pressure/temperature 202, rail pressure 204, and/or rail temperature 206 via a dedicated connection or via one or more communication networks. Additional or alternative inputs are also contemplated.

Injector pressure/temperature 202, rail pressure 204, and rail temperature 206 may be provided by sensors 34, 30, 32, respectively. The pressure and temperature outputs may be utilized as measurement according to the processes and controls disclosed herein and may be sampled repeatedly to determine multiple points or values of a pressure and/or temperature measurement.

ECS 40 and/or ECU 42 comprise control circuitry configured to implement and execute control logic for processing the inputs received by ECS 40 and/or ECU 42 and to determine and output the one or more injector control signals 52. In the illustrated example the circuitry of ECS 40 and/or ECU 42 is configured to provide and execute temperature measurement processing logic, pressure measurement processing logic, release condition determination logic, and injector control signal determination logic. In other embodiments, the control logic provided by ECS 40 and/or ECU 42 may be differently organized with the aspects of one or more of the processing and determination logics.

In an embodiment, the temperature measurement processing logic and pressure measurement processing logic are configured to make one or more determinations of gaseous fuel system temperature and gaseous fuel pressure, respectively. Temperature measurement processing logic may utilize injector temperature/pressure 202, rail temperature 206, and/or one or more other temperatures, such as engine system coolant temperature, engine system oil temperature, and/or an ambient temperature of the engine system in making a temperature determination. In some embodiments, the temperature determination may comprise any one of the aforementioned examples. In some embodiments the temperature determination may comprise determining an average of two or more of the aforementioned examples. In some embodiments the temperature determination may utilize two or more of the aforementioned examples to perform a rationality check or sensor error condition check.

Pressure measurement processing logic may utilize injector temperature/pressure 202 and/or rail pressure 204 in making a gaseous fuel pressure determination. In some embodiments, the gaseous fuel pressure determination may comprise either of the aforementioned examples. In some embodiments the gaseous fuel pressure determination may comprise an average of the aforementioned examples.

Release condition determination logic 214 is configured to determine whether to perform a release operation of one or more gaseous fuel injectors 20. Such release condition determination logic 214 may be based upon a temperature determination of temperature measurement processing logic and/or a pressure determination of pressure measurement processing logic. Release condition determination logic may evaluate a temperature determination of temperature measurement processing logic with respect to one or more temperature thresholds to determine whether a release condition is present and, in some embodiments, may further determine a grade or severity of a release condition.

Release condition actuation logic 216 is configured to determine control signals 52 for inducing vibration in one or more gaseous fuel injectors 20 with pulse width modulation hysteresis control and switching. Such release condition actuation logic 216 may comprise, for example, multiple hysteresis settings which vary the pulse width modulation current hysteresis to induce a vibration in movable mass 220 that is based on the natural resonance of the first and/or second flexible members 252, 256.

For example, for an elastomer seal 254 type of first flexible member 252, the Young's modulus (also known as modulus of elasticity or longitudinal stress divided by the strain) for elastomer material varies based on temperature. By way of illustration, the Young's modulus for certain elastomers at 20 to 150 degrees Celsius is about 2.2 megapascals (MPa). However, at 0 degrees Celsius, the Young's modulus increases to about 3.2 MPa, and at negative 40 degrees Celsius, the Young's modulus increases to 22.5 MPa. The elastomer seal 254 therefore has an eigenfrequency, or natural resonance, which varies based on temperature. As used herein, the eigenfrequency refers to the natural frequency in Hertz at which the elastomer seal 254 (or other flexible element 252, 256) tends to vibrate freely or oscillate when disturbed without external forces acting on it.

Release condition actuation logic 216 is configured to induce vibration in the movable mass 220 that is associated with the natural resonance of elastomer seal 254 (or other flexible element 252, 256) by controlling the drive current 210 and magnetic force applied by a magnetic coil such as solenoid 212. The drive current 210 is controlled at a frequency that attains the eigenfrequency for the elastomer seal 254 (or other flexible element 252, 256). For example, in one specific embodiment of elastomer material employed for elastomer seal 254, the drive current is driven at a frequency between 1 kilohertz (kHz) and 3 kHz using release condition actuation logic 216. In an embodiment, release condition actuation logic 216 varies the hysteresis setting of the amperes in the pulse width modulation control of the drive current.

Sweeping the pulse width modulation of the drive current through increased hysteresis ampere settings inversely varies the frequency that is produced in the movable mass 220 while producing corresponding increases in the magnitude of magnetic forces that are generated. The pulse width modulation control current hysteresis can be varied through a range of values that produce sufficient release forces until the resonant frequency is obtained to release moveable mass 220 from valve seat 224.

For example, it was found that a hysteresis setting of 3 amperes for pulse width modulation of the drive current produced a frequency of 4878 Hz and an amplitude of 8.59 newtons. A hysteresis setting of 4 amperes for pulse width modulation of the drive current produced a frequency of 3077 Hz and an amplitude of 14.07 newtons. A hysteresis setting of 5 amperes for pulse width modulation of the drive current produced a frequency of 2128 Hz and an amplitude of 23.27 newtons. A hysteresis setting of 6 amperes for pulse width modulation of the drive current produced a frequency of 1594 Hz and an amplitude of 28.88 newtons. A hysteresis setting of 7 amperes for pulse width modulation of the drive current produced a frequency of 1274 Hz and an amplitude of 36.85 newtons. Using a voltage source 208 of 24 volts, the force at each of these hysteresis settings is of sufficient amplitude to release the movable mass 220 from valve seat 224.

Release condition actuation logic 216 may include multiple pulse width modulation hysteresis settings through which to sweep that may be determined and may vary in response to a grade or severity of a temperature condition of fuel injector 20. For example, greater frequencies may be needed for more severe temperature conditions. The hysteresis of the pulse width modulation control of the drive current 210 can be estimated or swept through a number of settings or values in order to produce the frequency in movable mass 220 that corresponds to the natural resonance of the flexible element(s) 252, 256 at the current temperature condition.

Release condition determination logic 214 and release condition actuation logic 216 are examples of controls to make determinations whether to perform an injector release operation and to provide drive current control to release movable mass 220 from valve seat 224. Such determinations may comprises evaluating a temperature condition of the engine 12, the gaseous fuel system 14, and/or fuel injector 20.

Release condition actuation logic 216 is configured to determine and output the one or more injector control signals 52 to injector driver 50 to produce drive current 210. Release condition actuation logic 216 may operate in a nominal injector control mode wherein the one or more injector control signals 52 may be determined in response to fueling command 201, engine speed 203, rail pressure 204, rail temperature 206, injector pressure 208, and other parameters such as intake manifold pressure, intake manifold temperature, mass air flow or other parameters. In the normal injector control mode, release condition operation is suppressed and nominal injector operation is allowed.

Release condition actuation logic 216 may also operate in a release condition control mode wherein the one or more injector control signals 52 may be determined in response to a released condition determined by release condition determination logic 214. In the release condition injector control mode, nominal injector operation is suppressed and release condition operation is allowed. It shall be appreciated that suppression of nominal injector operation, and, more generally, suppression of other controls, commands, acts or operations of the controls and control processes of the present disclosure may be effectuated in a number of manners. Such suppression may, for example, include one or more of disabling, suspending, non-execution, non-performance, overriding, turning-off, or otherwise preventing occurrence or resulting in the absence of occurrence of a control event, commands, act, or operation.

In some embodiments release condition actuation logic 216 may be integrated or combined with one or more of release condition determination logic 214, temperature measurement processing logic, and pressure measurement processing logic, and/or other logic or controls. It shall be further appreciated that release condition determination logic and/or release condition actuation logic 216 may be configured and provided as one or more equations, lookup tables, maps, or response surfaces which are configured and operable to provide an injector current pulse-width modulation control in response to the aforementioned inputs.

It shall be appreciated that the controls discussed herein are an example of controls that may be implemented in and executed by one or more components of an electronic control system to perform the acts of determining whether to perform a release condition operation of the plurality of fuel injectors and, in response to a determination to perform the release condition operation, including energizing each of the plurality of gaseous fuel injectors with multiple drive current pulse width modulation values, and after the release condition operation commencing ignition to rotate the engine and allowing nominal fuel injector control.

With reference to FIG. 4, there is illustrated an example control process or method 400 (also referred to herein as method 400). Method 400 begins at start operation 402 which may comprise any of a number of events. In some embodiments, start operation 402 may comprise an engine key-on event or an engine start command event. In some embodiments, start operation 402 may comprise a post-engine shut down or a post engine key-off timer event.

From operation 402, method 400 proceeds to conditional 404 which evaluates whether a release condition is present between, for example, movable mass 220 and valve seat 224. The release condition can be determine using, for example, temperature and/or pressure parameters such as those described herein in connection with the controls provided by ECS 40 and/or ECU 42. If conditional 404 is NO, method 400 reverts to normal or nominal control of the movable mass 220 at operation 406. If conditional 404 is YES, method 400 continues at operation 408.

Operation 408 generates a drive current 210 for actuator 232 that is coupled to movable mass 220. The drive current 210 is generated at a pulse width modulation switching frequency and hysteresis current that induces a mechanical resonance in movable mass 220. Method 400 continues from operation 408 at operation 410 to release movable mass 220 from valve seat 224 via the mechanical resonance induced into movable mass 220 by drive current 210. Once movable mass 220 is released, method 400 can continue at operation 406, and then end at 412.

In an embodiment of method 400, operation 408 includes generating the drive current for actuator 232 by varying the pulse switch modulation frequency to induce the mechanical resonance in movable mass 220. In a further embodiment, varying the pulse width modulation frequency includes changing a hysteresis current of the pulse width modulation, which changes an amplitude of the mechanical resonance.

In an embodiment of method 400, operation 410 includes releasing an elastomer seal 254 associated with movable mass 220 that is frozen such that movable mass 220 is stuck to valve seat 224. In an embodiment, operation 406 includes displacing the released movable mass 220 from valve seat 224 to permit gaseous fuel flow through valve seat 224 to combustion chamber 16 of internal combustion engine 12.

As shown by this detailed description, the present disclosure contemplates multiple and various embodiments including, without limitation, the following example embodiments. In an embodiment, an internal combustion engine is operable to combust gaseous fuel. The internal combustion engine includes a gaseous fueling system including at least one fuel injector configured to inject gaseous fuel for combustion in the internal combustion engine. The at least one fuel injector includes a valve seat with at least one opening to permit gaseous fuel flow through the valve seat and a movable mass contactable with the valve seat to inhibit gaseous fuel flow through the valve seat. The internal combustion engine includes an electronic control system operatively coupled with the gaseous fueling system. The electronic control system is configured to determine a release condition between the valve seat and movable mass is present and induce a vibration in the movable mass in response to the release condition to release the movable mass from the valve seat.

In an embodiment, the movable mass includes a plunger. The plunger is reciprocally movable in the gaseous fuel injector from a first position in contact with the valve seat to a second position spaced apart from the valve seat.

In a further embodiment, the plunger includes an end face directed toward the valve seat. The end face includes an elastomer seal that contacts the valve seat to seal the valve seat around the at least one opening to inhibit gaseous fuel flow through the valve seat.

In a further embodiment, the valve seat includes a first projection along a first side of the at least one opening and a second projection along a second side of the at least one opening. The elastomer seal engages the first projection and the second projection to sealingly contact the valve seat.

In an embodiment, the fuel injector includes a solenoid that is operable in response to a drive current to generate a magnetic field to induce vibration in the movable mass. The electronic control system is configured to generate the drive current with a drive current hysteresis that is greater than a threshold amount to release the movable mass from the valve seat in response to the release condition.

In a further embodiment, the electronic control system is configured to use pulse width modulation control to generate the drive current at the drive current hysteresis.

In a further embodiment, the electronic control system includes a gate driver. The electronic control system is configured to turn off at least a high side driver of the gate driver during pulse width modulation control to generate the drive current with the drive current hysteresis.

In yet a further embodiment, the electronic control system is configured to turn off the high side driver and a low side driver of the gate driver during pulse width modulation to generate the drive current with the drive current hysteresis.

In a further embodiment, the electronic control system is configured to increase the drive current hysteresis of the pulse width modulation of the drive current to increase an amplitude of a force of the vibration while reducing a frequency of the generated drive current. In yet a further embodiment, the frequency is between 1 kilohertz and 3 kilohertz.

In a further embodiment, the threshold amount for the drive current hysteresis is at least 3 amperes.

In an embodiment, the electronic control system is configured to determine the release condition in response to least one of a temperature and a pressure of the gaseous fuel system.

In an embodiment, the vibration is induced in a manner that excites a mechanical resonance of the movable mass.

According to another aspect of the present disclosure, a method for releasing a movable mass attached to a valve seat is provided. The method includes determining a release condition between the movable mass and the valve seat is present; generating a drive current for an actuator that is coupled to the movable mass at a pulse width modulation switching frequency that induces a mechanical resonance in the movable mass; and releasing the movable mass from the valve seat via the mechanical resonance induced into the movable mass by the drive current.

In an embodiment, the release condition is a temperature condition associated with the movable mass freezing in contact with the valve seat.

In an embodiment, generating the drive current for the actuator includes varying the pulse switch modulation frequency to induce the mechanical resonance in the movable mass.

In a further embodiment, varying the pulse width modulation frequency includes changing a hysteresis of the pulse width modulation to change an amplitude of the mechanical resonance.

In an embodiment, releasing the movable mass includes releasing an elastomer seal that is located on the movable mass and frozen to the valve seat.

In an embodiment, the method includes displacing the released movable mass from the valve seat to permit gaseous fuel flow through the valve seat to a combustion chamber of an internal combustion engine.

According to another aspect of the present disclosure, a fueling system for injecting gaseous fuel to a combustion chamber of an internal combustion engine is provided. The fueling system includes a fuel injector configured to inject gaseous fuel for combustion in the combustion chamber of the internal combustion engine. The fuel injector includes a valve seat with at least one opening to permit gaseous fuel flow through the valve seat, a movable mass contactable with the valve seat to inhibit gaseous fuel flow through the valve seat, and an electronic actuator coupled to the movable mass. The electronic actuator is operable to move the movable mass away from the valve seat in response to a drive current supplied to the electronic actuator. The gaseous fuel system also includes an electronic control unit configured to generate the drive current at a pulse width modulation switching frequency that induces a mechanical resonance in the movable mass to release the movable mass from the valve seat.

It shall be appreciated that terms such as "a non-transitory memory," "a non-transitory memory medium," and "a non-transitory memory device" refer to a number of types of devices and storage mediums which may be configured to store information, such as data or instructions, readable or executable by a processor or other components of a computer system and that such terms include and encompass a single or unitary device or medium storing such information, multiple devices or media across or among which respective portions of such information are stored, and multiple devices or media across or among which multiple copies of such information are stored.

It shall be appreciated that terms such as "determine," "determined," "determining" and the like when utilized in connection with a control method or process, an electronic control system or controller, electronic controls, or components or operations of the foregoing refer inclusively to a number of acts, configurations, devices, operations, and techniques including, without limitation, calculation or computation of a parameter or value, obtaining a parameter or value from a lookup table or using a lookup operation, receiving parameters or values from a datalink or network communication, receiving an electronic signal *(e.g.,* a voltage, frequency, current, or pulse-width modulation (PWM) signal) indicative of the parameter or value, receiving output of a sensor indicative of the parameter or value, receiving other outputs or inputs indicative of the parameter or value, reading the parameter or value from a memory location on a computerreadable medium, receiving the parameter or value as a run-time parameter, and/or by receiving a parameter or value by which the interpreted parameter can be calculated, and/or by referencing a default value that is interpreted to be the parameter value.

While example embodiments of the disclosure have been illustrated and described in detail in the drawings and foregoing description, the same is to be considered as illustrative and not restrictive in character, it being understood that only certain example embodiments have been shown and described and that all changes and modifications that come within the spirit of the claimed inventions are desired to be protected. It should be understood that while the use of words such as preferable, preferably, preferred or more preferred utilized in the description above indicates that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

### CLAUSES TO AID UNDERSTANDING

1. An internal combustion engine operable to combust gaseous fuel, the internal combustion engine comprising:
   a gaseous fueling system including at least one fuel injector configured to inject gaseous fuel for combustion in the internal combustion engine, the at least one fuel injector including:
      a valve seat with at least one opening to permit gaseous fuel flow through the valve seat; and
      a movable mass contactable with the valve seat to inhibit gaseous fuel flow through the valve seat; and
   an electronic control system operatively coupled with the gaseous fueling system, the electronic control system being configured to:
      determine a release condition between the valve seat and movable mass is present; and
      induce a vibration in the movable mass in response to the release condition to release the movable mass from the valve seat.
2. The internal combustion engine according to clause 1, wherein the movable mass includes a plunger, and the plunger is reciprocally movable in the gaseous fuel injector from a first position in contact with the valve seat to a second position spaced apart from the valve seat.
3. The internal combustion engine according to clause 2, wherein the plunger includes an end face directed toward the valve seat, the end face including an elastomer seal that contacts the valve seat to seal the valve seat around the at least one opening to inhibit gaseous fuel flow through the valve seat.
4. The internal combustion engine according to clause 3, wherein:
   the valve seat includes a first projection along a first side of the at least one opening and a second projection along a second side of the at least one opening; and
   the elastomer seal engages the first projection and the second projection to sealingly contact the valve seat.
5. The internal combustion engine according to clause 1, wherein:
   the fuel injector includes a solenoid that is operable in response to a drive current to generate a magnetic field to induce vibration in the movable mass; and
   the electronic control system is configured to generate the drive current with a drive current hysteresis that is greater than a threshold amount to release the movable mass from the valve seat in response to the release condition.
6. The internal combustion engine according to clause 5, wherein the electronic control system is configured to use pulse width modulation control to generate the drive current at the drive current hysteresis.
7. The internal combustion engine according to clause 6, wherein the electronic control system includes a gate driver, and the electronic control system is configured to turn off at least a high side driver of the gate driver during pulse width modulation to generate the drive current with the drive current hysteresis.
8. The internal combustion engine according to clause 7, wherein the electronic control system is configured to turn off the high side driver and a low side driver of the gate driver during pulse width modulation to generate the drive current with the drive current hysteresis.
9. The engine according to clause 6, wherein the electronic control system is configured to increase the drive current hysteresis of the pulse width modulation of the drive current to increase an amplitude of a force of the vibration while reducing a frequency of the generated drive current.
10. The internal combustion engine according to clause 9, wherein the frequency is between 1 kilohertz and 3 kilohertz.
11. The internal combustion engine according to clause 5, wherein the threshold amount for the drive current hysteresis is at least 3 amperes.
12. The internal combustion engine according to clause 1, wherein the electronic control system is configured to determine the release condition in response to least one of a temperature and a pressure of the gaseous fuel system.
13. The internal combustion engine according to clause 1, wherein the vibration is induced in a manner that excites a mechanical resonance of the movable mass.
14. A method for releasing a movable mass attached to a valve seat, the method comprising:
   determining a release condition between the movable mass and the valve seat is present;
   generating a drive current for an actuator that is coupled to the movable mass at a pulse width modulation switching frequency that induces a mechanical resonance in the movable mass; and releasing the movable mass from the valve seat via the mechanical resonance induced into the movable mass by the drive current.
15. The method according to clause 14, wherein the release condition is a temperature condition associated with the movable mass freezing in contact with the valve seat.
16. The method according to clause 14, wherein generating the drive current for the actuator includes varying the pulse switch modulation frequency to induce the mechanical resonance in the movable mass.
17. The method according to clause 16, wherein varying the pulse width modulation frequency includes changing a hysteresis of the pulse width modulation to change an amplitude of the mechanical resonance.
18. The method according to clause 14, wherein releasing the movable mass includes releasing an elastomer seal that is located on the movable mass and frozen to the valve seat.
19. The method according to clause 14, further comprising:
   displacing the released movable mass from the valve seat to permit gaseous fuel flow through the valve seat to a combustion chamber of an internal combustion engine.
20. A fueling system for injecting gaseous fuel to a combustion chamber of an internal combustion engine, the fueling system comprising:
   a fuel injector configured to inject gaseous fuel for combustion in the combustion chamber of the internal combustion engine, the fuel injector including:
   a valve seat with at least one opening to permit gaseous fuel flow through the valve seat;
   a movable mass contactable with the valve seat to inhibit gaseous fuel flow through the valve seat; and
   an electronic actuator coupled to the movable mass, the electronic actuator operable to move the movable mass away from the valve seat in response to a drive current supplied to the electronic actuator; and
   an electronic control unit configured to generate the drive current at a pulse width modulation switching frequency that induces a mechanical resonance in the movable mass to release the movable mass from the valve seat.

## Claims

1. An internal combustion engine operable to combust gaseous fuel, the internal combustion engine comprising:
a gaseous fueling system including at least one fuel injector configured to inject gaseous fuel for combustion in the internal combustion engine, the at least one fuel injector including:
a valve seat with at least one opening to permit gaseous fuel flow through the valve seat; and
a movable mass contactable with the valve seat to inhibit gaseous fuel flow through the valve seat; and
an electronic control system operatively coupled with the gaseous fueling system, the electronic control system being configured to:
determine a release condition between the valve seat and movable mass is present; and
induce a vibration in the movable mass in response to the release condition to release the movable mass from the valve seat.

2. The internal combustion engine according to claim 1, wherein the movable mass includes a plunger, and the plunger is reciprocally movable in the gaseous fuel injector from a first position in contact with the valve seat to a second position spaced apart from the valve seat.

3. The internal combustion engine according to claim 2, wherein the plunger includes an end face directed toward the valve seat, the end face including an elastomer seal that contacts the valve seat to seal the valve seat around the at least one opening to inhibit gaseous fuel flow through the valve seat.

4. The internal combustion engine according to claim 3, wherein:
the valve seat includes a first projection along a first side of the at least one opening and a second projection along a second side of the at least one opening; and
the elastomer seal engages the first projection and the second projection to sealingly contact the valve seat.

5. The internal combustion engine according to claim 1, wherein:
the fuel injector includes a solenoid that is operable in response to a drive current to generate a magnetic field to induce vibration in the movable mass; and
the electronic control system is configured to generate the drive current with a drive current hysteresis that is greater than a threshold amount to release the movable mass from the valve seat in response to the release condition.

6. The internal combustion engine according to claim 5, wherein
(a) the electronic control system is configured to use pulse width modulation control to generate the drive current at the drive current hysteresis, or
(b) the threshold amount for the drive current hysteresis is at least 3 amperes.

7. The internal combustion engine according to claim 6, wherein
(a) the electronic control system includes a gate driver, and the electronic control system is configured to turn off at least a high side driver of the gate driver during pulse width modulation to generate the drive current with the drive current hysteresis, or
(b) the electronic control system is configured to increase the drive current hysteresis of the pulse width modulation of the drive current to increase an amplitude of a force of the vibration while reducing a frequency of the generated drive current..

8. The internal combustion engine according to claim 7, wherein the electronic control system is configured to turn off the high side driver and a low side driver of the gate driver during pulse width modulation to generate the drive current with the drive current hysteresis.

9. The internal combustion engine according to claim 7, wherein the frequency is between 1 kilohertz and 3 kilohertz.

10. The internal combustion engine according to claim 1, wherein
(a) the electronic control system is configured to determine the release condition in response to least one of a temperature and a pressure of the gaseous fuel system, or
(b) the vibration is induced in a manner that excites a mechanical resonance of the movable mass.

11. A method for releasing a movable mass attached to a valve seat, the method comprising:
determining a release condition between the movable mass and the valve seat is present;
generating a drive current for an actuator that is coupled to the movable mass at a pulse width modulation switching frequency that induces a mechanical resonance in the movable mass; and
releasing the movable mass from the valve seat via the mechanical resonance induced into the movable mass by the drive current.

12. The method according to claim 11,
(a) wherein the release condition is a temperature condition associated with the movable mass freezing in contact with the valve seat, or
(b) wherein generating the drive current for the actuator includes varying the pulse width modulation frequency to induce the mechanical resonance in the movable mass, or
(c) wherein releasing the movable mass includes releasing an elastomer seal that is located on the movable mass and frozen to the valve seat, or
(d) further comprising:
displacing the released movable mass from the valve seat to permit gaseous fuel flow through the valve seat to a combustion chamber of an internal combustion engine.

13. The method according to claim 12, wherein varying the pulse width modulation frequency includes changing a hysteresis of the pulse width modulation to change an amplitude of the mechanical resonance.

14. A fueling system for injecting gaseous fuel to a combustion chamber of an internal combustion engine, the fueling system comprising:
a fuel injector configured to inject gaseous fuel for combustion in the combustion chamber of the internal combustion engine, the fuel injector including:
a valve seat with at least one opening to permit gaseous fuel flow through the valve seat;
a movable mass contactable with the valve seat to inhibit gaseous fuel flow through the valve seat; and
an electronic actuator coupled to the movable mass, the electronic actuator operable to move the movable mass away from the valve seat in response to a drive current supplied to the electronic actuator; and
an electronic control unit configured to generate the drive current at a pulse width modulation switching frequency that induces a mechanical resonance in the movable mass to release the movable mass from the valve seat.
